# EUROPÄISCHE PATENTSCHRIFT

(11) **EP 1 812 189 B1**
(45) Veröffentlichungstag und Bekanntmachung des Hinweises auf die Patenterteilung: **07.01.2009**
(21) Anmeldenummer: 05806613.5
(22) Anmeldetag: 28.10.2005
(51) Int. Cl.: B23D 21/00, B23D 45/12

(54) **ROHRSCHNEIDEMASCHINE**
TUBE CUTTING MACHINE
MACHINE A COUPER LES TUYAUX

(30) Priorität: 06.11.2004 DE 102004053732
(43) Veröffentlichungstag der Anmeldung: 01.08.2007
(73) Patentinhaber: Rattunde & Co GmbH, 19288 Ludwigslust (DE)
(72) Erfinder: RATTUNDE, Ulrich, 19322 Bentwisch (DE); WILLECKE, Lothar, 59846 Sundern (DE)
(74) Vertreter: Groth, Wieland
(86) Internationale Anmeldenummer: PCT/DE2005/001942
(87) Internationale Veröffentlichungsnummer: WO 2006/047992

(56) Entgegenhaltungen:
- WO-A-00/71288
- US-A- 1 716 976
- US-A- 5 081 768

## Beschreibung

Die Erfindung betrifft eine Schneidemaschine und ein Verfahren zum Abschneiden von Abschnitten von einem stangenförmigen Profilmaterial nach dem Oberbegriff des Anspruchs 1 bzw. nach dem Oberbegriff des Anspruchs 14, welche aus der DE 100 15 367 C1 bekannt sind.

Rohrschneidemaschinen und Verfahren zum Abschneiden von Rohrabschnitten von Rohren sind im Stand der Technik hinlänglich bekannt. Bekannte Rohrschneidmaschinen weisen dafür zwei voneinander unabhängig steuerbare Werkzeuge auf, ein Anreißwerkzeug und ein Schneidwerkzeug.

Mithilfe des Anreißwerkzeuges wird zunächst ein Ritz in die Rohraußenwandung eingebracht, um die Rohraußenwandung in einer Schnittebene zu schwächen. Das Anreißwerkzeug wird danach vom Rohr weg verfahren und in einem folgenden Arbeitsschritt wird die Klinge in die geschwächte Rohraußenwandung hineingestoßen, die einen Rohrabschnitt vom Rohr ablängt. Nachdem die Klinge vom Rohr weg verfahren wurde, wird das Rohr um eine Länge eines Rohrabschnitts in seiner Längsrichtung vorgefördert.

In einem sich anschließenden, dem oben beschriebenen gleichenden Arbeitstakt wird ein weiterer Rohrabschnitt abgelängt.

Aus der DE 100 15 367 C1 ist eine Rohrschneidemaschine mit einem maschinell betätigbaren Messer und einer Anritzeinrichtung bekannt. Die Anritzeinrichtung und das Messer werden unabhängig von einander gesteuert.

Aus der CH 568 117 ist eine handgeführte Rohrsäge bekannt. Das Zersägen erfolgt dabei mittels einer handgeführten Schwenkbewegung des Sägeblattes um das zu zersägende Rohr herum.

Aus der DE 196 03 361 C2 ist eine ebenfalls handgeführte Rohrsäge bekannt. Die Rohrsäge ist eine Weiterentwicklung der aus der genannten Schweizer Patentschrift bekannten Vorrichtung. Die weiter entwickelte Vorrichtung betrifft eine kombinierte Säge- und Anfasmaschine für dünnwandige Rohre.

Die bekannten Rohrschneidemaschinen weisen den Nachteil auf, dass das Anreißen und das Schneiden des Rohrs durch zwei separate Werkzeuge erfolgen. Beide Werkzeuge werden über eine zugeordnete Hydrauliksteuerung angetrieben. Das bedeutet erhebliche mechanische Bewegungen über längere Strecken für beide Werkzeuge bzw. die sich auch bewegende Hydrauliksteuerung. Mechanische Bewegungen verschleißen die Maschine in starkem Maße.

Es ist somit Aufgabe der vorliegenden Erfindung, eine Schneidemaschine und ein Verfahren zum Abschneiden von Abschnitten von einem stangenförmigen Profilmaterial zur Verfügung zu stellen, die geringerem Verschleiß unterworfen ist, bzw. bei dem ein geringerer Verschleiß auftritt.

Die Aufgabe wird durch eine gattungsgemäße Schneidemaschine mit den Merkmalen des Anspruch 1 und ein Verfahren mit den Merkmalen des Anspruchs 14 gelöst.

Durch die während des Betriebs der Schneidemaschine zwischen dem wenigstens einen Anreiß- und dem wenigstens einen Schneidwerkzeug vorhandenen konstanten Relativstellung, können sich die Anreiß- und Schneidwerkzeuge nicht gegenseitig behindern, wenn sie nacheinander zum Anreißen bzw. Abschneiden an das Profilmaterial herangeführt werden. Unter Relativstellung ist dabei sie Position der beiden Werkzeuge zueinander zu verstehen. Ihre Stellung gegenüber dem Profilmaterial, der Schneidemaschine u.Ä. ist natürlich veränderbar. Da die Wegbewegung des Anreißwerkzeuges gleichzeitig die Heranbewegung des Schneidwerkzeugs ist, sind insgesamt weniger mechanische Bewegungen als bei bekannten, gattungsgemäßen Schneidemaschinen erforderlich, und der Verschleiß der Schneidemaschinen wird herabgesetzt. Der Begriff Profilmaterial ist hier allgemein zu verstehen. Er umfasst insbesondere Rundrohre, aber auch Vierkantprofile, Rechteckprofile, Sonderprofile, Ellipsenrohre, und Flachovalrohre.

Wenigstens Teile des wenigstens einen Anreiß- und wenigstens Teile des wenigstens einen Schneidwerkzeug sind vorzugsweise einteilig miteinander zu einem Anreiß- und Schneidwerkzeug verbunden. Beispielsweise können auf einem einteiligen Grundkörper austauschbare Schneiden und Anreißhacken vorgesehen sein. Die einteilige Verbindung macht eine gemeinsame Steuerung z.B. über eine gemeinsame Welle möglich. Dadurch wird eine separate mechanische Steuervorrichtung gespart. Die gemeinsame Welle kann durch eine einfache Softwarelösung numerisch gesteuert werden.

Vorzugsweise ist das Anreiß- und Schneidwerkzeug einteilig ausgebildet. Es kann dann bei Verschleiß komplett ausgetauscht werden. Ein separater Klingenwechsel ist dann nicht nötig. Einteilige Werkzeuge sind gegenüber mehrteiligen Werkzeugen kostengünstig herstellbar und weniger störungsanfällig.

In einer bevorzugten Ausführungsform der Erfindung ist das Anreiß- und Schneidwerkzeug scheibenförmig ausgebildet. Von einer Scheibe gehen das wenigstens eine Anreißwerkzeug und das wenigstens eine Schneidwerkzeug radial ab. Die Scheibe kann um eine in Längsrichtung des Profilmaterials verlaufende Rotationsachse rotierbar sein und quer zur Längsachse des Profilmaterials verfahrbar sein. Die Welle geht günstigerweise vom Mittelpunkt der Scheibe senkrecht ab, und sie ist an dem der Scheibe gegenüberliegenden Ende mit einem Wellenantrieb verbunden. Über die Welle ist das Anreiß- und Schneidwerkzeug besonders bequem steuerbar. Durch die Rotationsbewegung ist der Ritz mit Hilfe des wenigstens einen Anreißwerkzeugs in die Außenwandung des Profilmaterials einbringbar.

Der eigentliche Schneidvorgang wird mit dem wenigstens einen Schneidwerkzeug durchgeführt. Dazu wird das Anreißwerkzeug vom Profilmaterial wegrotiert, wobei das wenigstens eine Schneidwerkzeug durch dieselbe Rotationsbewegung der Scheibe zum Profilmaterial hinbewegt wird. Die Steuerung des Anreiß- und Schneidwerkzeugs ist so ausgelegt, dass das Schneidwerkzeug über dem Ritz positioniert wird. Durch eine Verfahrbewegung der Welle zum Profilmaterial hin, kann ein Abschnitt des Profilmaterials durch das wenigstens eine Schneidwerkzeug abgelängt werden, indem das Schneidwerkzeug in das Profilmaterial eindringt und es durchtrennt.

Vorzugsweise weist das Anreißwerkzeug zwei in einer Rotationsrichtung gebogene Anreißzähne auf, wobei ein vorlaufender Anreißzahn eine geringere Höhe aufweist als ein nachlaufender Anreißzahn. Während der Rotationsbewegung werden somit zwei Späne aus der Außenwandung herausgeschält. Denkbar sind aber auch Anreißwerkzeuge mit drei oder einer Mehrzahl von in Rotationsrichtung hintereinander angeordneten Anreißzähnen.

In einer anderen bevorzugten Ausführungsform weist das Anreißwerkzeug wenigstens zwei radial gleich lange in Rotationsrichtung gebogene Anreißzähne auf. Dabei ist die Steuerung des Anreiß- und Schneidwerkzeugs vorzugsweise derart ausgebildet, dass das Anreißwerkzeug während der Rotationsbewegung einen radialen Vorschub zum Profilmaterial hin erfährt. Auch in dieser Ausführungsform können während des Anreißens wenigstens zwei Späne aus dem Profilmaterial herausgeschält werden. In entsprechender Weise kann eine Steuerung für drei oder eine Mehrzahl radial gleich langer Anreißzähne vorgesehen sein.

Die Rotationsrichtung des Anreiß- und Schneidwerkzeugs verläuft quer zur Längsrichtung des länglichen Profilmaterials. Die Rotationsachse verläuft im Wesentlichen neben der Längsrichtung des länglichen Profilmaterials.

Das Schneidwerkzeug kann zwei in einer Spitze zulaufende Schneiden aufweisen, wobei die Spitze vom Anreiß- und Schneidwerkzeug weggerichtet ist. Die Spitze erleichtert das Eindringen des Schneidwerkzeugs in das durch den Ritz geschwächte Profilmaterial. Die eine, vorzugsweise in Rotationsrichtung vorlaufende Schneide kann in Rotationsrichtung gebogen sein und die andere, vorzugsweise in Rotationsrichtung nachlaufende Schneide kann entgegen der Rotationsrichtung gebogen sein. Der Abschnitt ist durch Verfahren des Schneidwerkzeugs in radialer Richtung zum Profilmaterial hin ablängbar

Günstigerweise sind entlang eines Umfanges der Scheibe mehrere Werkzeuge angeordnet. Schneid- und Anreißwerkzeuge können einen gleichmäßigen Abstand voneinander aufweisen und alternierend angeordnet sein. Durch die Mehrzahl der Werkzeuge wird die Standzeit des Anreiß- und Schneidwerkzeuges erhöht und durch den gleichmäßigen Abstand ist eine besonders einfache Steuerung der Scheibe möglich.

In dem erfindungsgemäßen Verfahren nach Anspruch 14, das sich insbesondere zur Durchführung mit einer der vorbeschriebenen Maschinen eignet, wird der Ritz durch eine Rotationsbewegung des Anreißwerkzeugs in die Rohrwandung eingebracht. Dabei wird die Relativstellung zwischen Anreiß- und Schneidwerkzeug beibehalten und so wird das Schneidwerkzeug durch dieselbe Rotationsbewegung über dem Ritz positioniert, um anschließend durch die Profilmaterialwandung gestoßen zu werden. Die Länge der Bewegungswege beider Werkzeuge insgesamt verkürzt sich somit.

Vorzugsweise wird der Abschnitt des Profilmaterials nach dem Anreißen durch eine wenigstens in einer Bewegungskomponente von innen nach außen geführte Schneidbewegung geschnitten. Durch diese Schneidbewegung wird das Ende des Profilmaterials im Bereich der Schnittfläche, insbesondere im Zusammenwirken mit von außen an dem Profilmaterial im Bereich der Schnittfläche anliegenden Haltebacken, nur unwesentlich verformt. Die durch den Schneidvorgang auf das Profilmaterialende wirkende Kraft wird durch die Haltebacken kompensiert. Grundsätzlich ist die Durchführung des erfindungsgemäßen Verfahrens auch mit Anreißwerkzeugen möglich, die unabhängig von den Schneidwerkzeugen gesteuert werden. Die beiden Werkzeugarten brauchen hier nicht einheitlich sein, oder fest zusammenhängen.

Vor den Schneidschritten des Verfahrens wird das Profilmaterial vorzugsweise durch ein gleich lange Anreißzähne aufweisendes, rotierendes Anreißwerkzeug angeritzt. Während des Anreißvorgangs wird das Anreißwerkzeug hier, zusätzlich zur Rotationsbewegung, radial zum Profilmaterial hin verschoben, um somit durch jeden Anreißzahn einen Span vom Profilmaterial abzuheben.

Zur Durchführung der Schneidschritte des Verfahrens weist das wenigstens eine Schneidwerkzeug des rotierbaren Anreiß- und Schneidwerkzeugs vorzugsweise eine erste Schneide auf, die in Rotationsrichtung über eine Radiale hinausgehend gebogen ist und eine zweite Schneide, die in eine entgegen gesetzte Rotationsrichtung über eine Radiale hinausgehend gebogen ist. Es sind aber auch andere Schneidformen möglich.

Zum Schneiden des Profilmaterials wird die zweite Schneide zunächst über dem Ritz des Profilmaterials positioniert und durch den Ritz in das Profilmaterial ein Stück weit eingeführt. Dann wird das Profilmaterial in der Schnittebene mittels der zweiten Schneide in einer ersten Schneidbewegung mit einer von dem Inneren des Profilmaterials nach außen gerichteten Bewegungskomponente in einem ersten Sektor der Schnittebene geschnitten. Danach wird das Anreiß- und Schneidwerkzeugs wieder in Rotationsrichtung rotiert, dabei wird das Profilmaterial mittels der ersten Schneide in der Schnittebene in einer zweiten Schneidbewegung mit einer von dem Inneren des Profilmaterials nach Außen gerichteten Bewegungskomponente in einem zweiten Sektor der Schnittebene geschnitten.

Vorzugsweise weist das wenigstens eine Schneidwerkzeug einen vorlaufenden Schneidzahn, mit der ersten Schneide an einer vorlaufenden Kante und einen davon beabstandeten nachlaufenden Schneidzahn, mit der zweiten Schneide an der nachlaufenden Kante, auf. Dabei kann beispielsweise an der nachlaufenden Kante des vorlaufenden Schneidzahns eine dritte Schneide angeordnet sein, mittels der der Abschnitt des Profilmaterials vollständig in einer entgegen gesetzten Rotationsbewegung ablängbar ist.

In einer bevorzugten Ausführungsform der Erfindung weist die Maschine Haltebacken für das Rohr auf, die durch einen Haltebackenantrieb antreibbar sind. Die Haltebacken verlaufen in Längsrichtung des Rohres direkt neben der Schnittebene. Damit ist die Schnittebene besonders gut fixiert, und während des Schneidens können geringe Toleranzen eingehalten werden. Weiterhin können Vorschubbacken vorgesehen sein, die durch einen Vorschubantrieb in Längsrichtung bewegbar sind. Der Vorschubantrieb gestattet es, das Profilmaterial um eine Abschnittlänge zum erneuten Ablängen vorzufördern. Vorzugsweise sind Vorschubantrieb, Haltebackenantrieb und Wellenantrieb zentral numerisch gesteuert (NC gesteuert).

Die Haltebacken eignen sich besonders in Kombination mit einem Schneidwerkzeug, das einen vorlaufenden Schneidzahn und einen nachlaufenden Schneidzahn aufweist, wobei das Profilmaterial durch eine von innen nach außen geführte Schneidbewegung geschnitten wird. Aufgrund der von innen nach außen geführten Bewegung, die an den Haltebacken abgestützt ist, wird das Ende des Profilmaterials an der Schnittebene wenig verformt.

Die Erfindung wird anhand von Ausführungsbeispielen in zehn Figuren beispielhaft beschrieben. Dabei zeigen:
- Fig. 1: perspektivische Prinzipansicht einer erfindungsgemäßen Rohrschneidemaschine mit eingespanntem Rohr,
- Fig. 2: Einbringen eines Ritzes in eine Rohraußenwandung,
- Fig. 3: Ausrichten einer Schneide in eine Schneidposition oberhalb der angeritzten Rohraußenwandung,
- Fig. 4: Abschneiden eines Rohrabschnitts,
- Fig. 5: Befördern des Rohres in Längsrichtung,
- Fig. 6: Anreiß- und Schneidscheibe in einer zweiten Ausführungsform,
- Fig. 7: Anreißen im erfindungsgemäßen Verfahren, a) Eindringen des Anreißzahnes in ein Rohr, b) Abheben eines ersten Spanes,
- Fig. 8: a) das dem in Fig.7 dargestellten Anreißen nachfolgende Eindringen eines nachlaufenden Schneidzahnes in das Rohr, b) Schneiden eines ersten Sektors das Rohr, c) Abheben eines zweiten Spanes,
- Fig. 9: das dem in Fig.8 dargestellten Schneiden des ersten Sektors nachfolgende Schneiden eines zweiten Sektors des Rohrs mittels eines vorlaufenden Zahnes,
- Fig. 10: a) das dem in Fig.9 dargestellten Schneiden des zweiten Sektors nachfolgende Schneiden eines dritten Sektors des Rohrs, b) Abheben eines vierten Spanes.

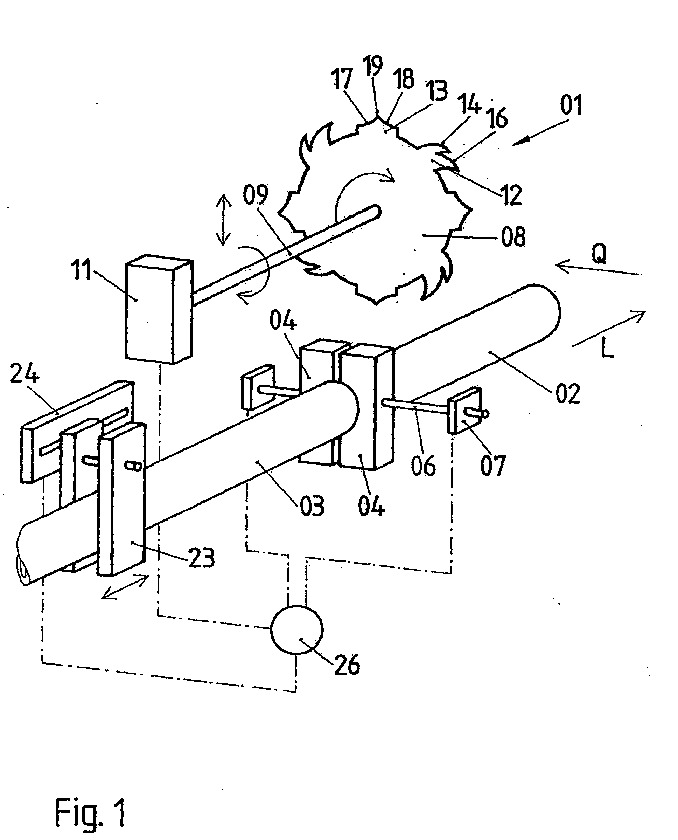

Fig.1 zeigt eine Prinzipansicht eines Teils einer erfindungsgemäßen Rohrschneidemaschine 01. Mit Hilfe der Rohrschneidemaschine 01 können Abschnitte 02 einer vorgebbaren Länge von einem Rohr 03 abgeschnitten werden. Das Rohr 03 ist zwischen zwei gegeneinander senkrecht zu einer Längsrichtung L des Rohres 03 verfahrbaren Haltebacken 04 fixierbar. Jede der Haltebacken 04 ist über eine Steuerstange 06 mit einem Haltebackenantrieb 07 verbunden. Wenn die Haltebacken 04 das Rohr 03 an dessen Rohraußenwandung festklemmen, steht der abzuschneidende Rohrabschnitt 02 über die Haltebacken 04 in Längsrichtung L hinaus ab. In Längsrichtung L ist zwischen den Haltebacken 04 und dem freien Ende des Rohrabschnitts 02 eine einteilige Anreiß- und Schneidscheibe 08 angeordnet, die über eine Welle 09 durch einen Wellenantrieb 11 antreibbar ist. Die Welle 09 verläuft auch in Längsrichtung L.

Die Anreiß- und Schneidscheibe 08 ist im Wesentlichen scheibenförmig ausgebildet und weist an ihrem Scheibenumfang alternierend, in gleichmäßigen Abständen voneinander angeordnete Anreißwerkzeuge 12 und Schneidwerkzeuge 13 auf. Die Anreiß- und Schneidscheibe 08 ist einteilig aus Metall, vorzugsweise aus Stahl, ausgebildet. Sie bildet so ein einheitliches Werkzeug aus. Die in Fig.1 bis Fig.5 abgebildete Anreiß- und Schneidscheibe 08 weist vier Anreißwerkzeuge 12 und vier Schneidwerkzeuge 13, letztere in Form von Klingen, auf. Die Welle 09 geht von einem Scheibenmittelpunkt senkrecht zu einer Scheibenebene ab und ist mit dem Wellenantrieb 11 verbunden, der die Anreiß- und Schneidscheibe 08 in Rotationsrichtung R, d.h. in Fig.1 im Uhrzeigersinn antreibt. Zusätzlich ist die Welle 09 durch den Wellenantrieb 11 senkrecht zum Rohr 03 hin und vom Rohr 03 weg verfahrbar. Bewegungsfreiheitsgrade sind in den Figuren generell durch Pfeile dargestellt.

Das Anreißwerkzeug 12 weist jeweils zwei in Rotationsrichtung R gebogene, hintereinander angeordnete Zähne 14, 16 auf, einen vorlaufenden Zahn 16 und einen nachlaufenden Zahn 14.

Jedes Schneidwerkzeug 13 weist zwei bogenförmig aufeinander in einer Spitze 19 zulaufende Schneiden 17, 18 auf. Die beiden Schneiden 17, 18 verlaufen in einer Ebene der Scheibe 08, und sie sind in Rotationsrichtung R nacheinander angeordnet. Die zwischen einer vorlaufenden Schneide 18 und einer nachlaufenden Schneide 17 ausgebildete Spitze 19 zeigt radial vom Mittelpunkt der Scheibe 08 weg.

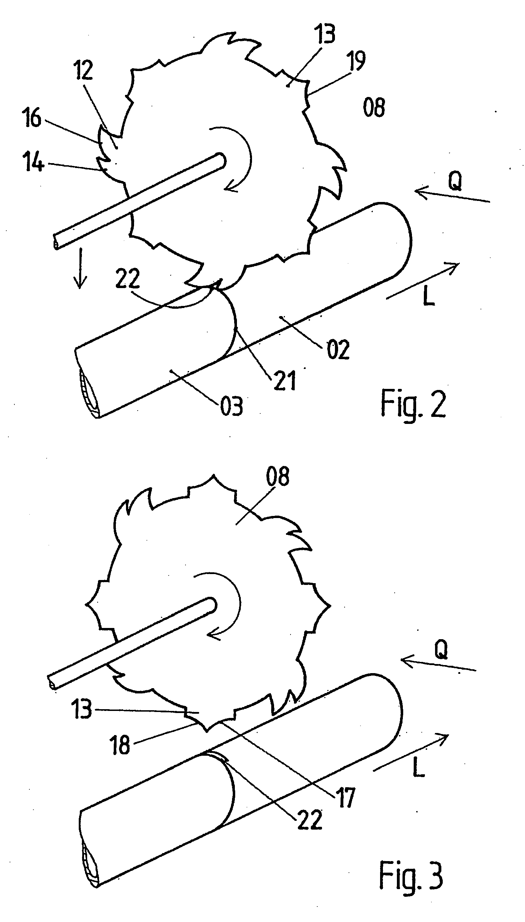

Um den Rohrabschnitt 02 vom Rohr 03 abzuschneiden, wird die Anreiß- und Schneidscheibe 08 gemäß Fig.2 soweit zum Rohr 03 translatorisch hin bewegt, dass die Scheibe 08 nicht mehr frei über dem Rohr 03 rotieren kann. Während einer der Translationsbewegung gleichzeitigen oder ihr nachfolgenden Rotationsbewegung bringt das Anreißwerkzeug 12 einen länglichen Ritz 22 in die Außenwandung des Rohres 03 in einer Schnittebene 21 ein, die senkrecht zur Längsrichtung L verläuft. Der vorlaufende Zahn 16 weist eine geringere radiale Länge als der nachlaufende Zahn 14 auf. Beide Zähne 14, 16 stehen radial weiter als die Spitzen 19 vom Mittelpunkt der Scheibe 08 ab. Durch die Rotation der Scheibe 08 werden somit durch eines der vier Anreißwerkzeuge 12 kurz nacheinander zwei Späne aus der Außenwandung des Rohres 03 gerissen und damit der längliche Ritz 22 in der Schnittebene 21 in die Außenwandung des Rohres 03 eingebracht. Durch den länglichen Ritz 22 ist die Außenwandung in der Schnittebene 21 geschwächt.

Nach dem Einbringen des Ritzes 22 in die Außenwandung des Rohres 03, wird das kombinierte Anreiß- und Schneidwerkzeug 08 gemäß Fig.3 in einer Schneidposition drehfest arretiert. In der Schneidposition ist eines der Schneidwerkzeuge 13 oberhalb des länglichen Ritzes 22 angeordnet.

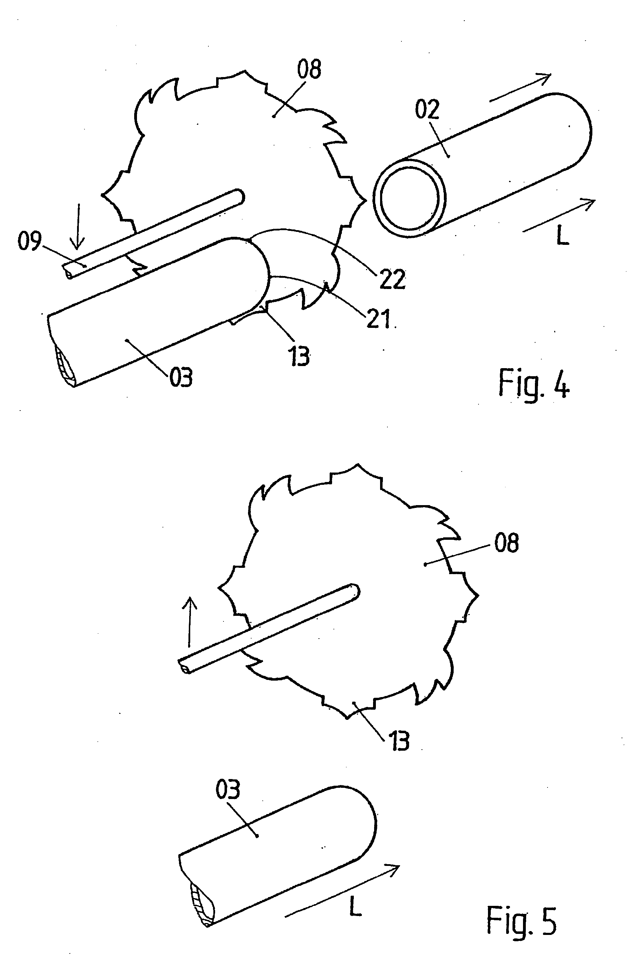

Fig.4 zeigt den dem Anreißen folgenden Schritt des Zerschneidens des Rohres 03, in dem das arretierte Schneidwerkzeug 13 durch den Wellenantrieb 11 zum Rohr 03, wiederum translatorisch, hin bewegt wird. Dadurch dringt das Schneidwerkzeug 13 in den Ritz 22 ein. Die Kraft des Wellenantriebs 11 ist so dimensioniert, dass die Klinge 13 die durch den Ritz 22 geschwächte Rohrwandung durchstößt und den durch die Schnittebene 21 vorgegebenen Rohrabschnitt 02 vollständig vom Rohr 03 abtrennt. Eine Länge des Schneidwerkzeugs 13 in Rotationsrichtung R entspricht dabei wenigstens dem maximalen Rohrdurchmesser des Rohrs 03. Somit kann der Rohrabschnitt 02 in einer einzigen Schneidbewegung vom Rohr 03 abgetrennt werden. Eine Schnittfläche des abgetrennten Rohrabschnitts 02 kann einer weiteren Behandlung, beispielsweise durch Bürsten oder Anfasen, unterzogen werden.

In einem folgenden Schritt wird die Anreiß- und Schneidscheibe 08, gemäß Fig. 5, wieder vom Rohr 03 weg bewegt, bis das Schneidwerkzeug 13 aus dem Rohrdurchmesser vollständig entfernt ist.

Wie Fig. 1 zeigt, ist das Rohr 03 in Vorschubbacken 23 eines Vorschubantriebs 24 eingespannt. Vorschubbacken 23 und Vorschubantrieb 24 dienen dazu, das Rohr 03 nach dem Abschneiden eines Rohrabschnitts 02 und dem Lösen der Haltebacken 04 um eine Abschnittslänge vorzuschieben. Das Rohr 03 ist in Längsrichtung L durch den Vorschubantrieb 24 vorschiebbar. Die Vorschubbewegung in Längsrichtung L ist in Fig. 5 dargestellt.

In einem weiteren Arbeitstakt kann dann ein weiterer Rohrabschnitt 02 vom Rohr 03 abgeschnitten werden. Ein Arbeitstakt dauert weniger als 1 Sekunde. Mit der Rohrschneidemaschine 01 können auch Edelstahlrohre, wie Chrom-Nickel Rohre, durchschnitten werden.

Fig.1 zeigt eine NC-Steuerschaltung 26 für den Wellenantrieb 11, den Haltebackenantrieb 07 und den Vorschubantrieb 24. Die NC-Steuerschaltung 26 wirkt mit Sensorelementen (nicht eingezeichnet) zusammen, die die Stellung der Anreiß- und Schneidscheibe 08 und die Position des Rohres 03 ermitteln. Vor der Durchführung des Schneidvorganges sind Parameter, wie Rohrdurchmesser, Wandungsstärke, Rohrmaterial und Länge des Rohrabschnitts 02 in einen der NC-Steuerschaltung 26 zugeordneten Speicher eingebbar. Ein programmierter Prozessor errechnet aus den Parameterwerten die Längen und Zeitpunkte der zu durchlaufenden Wege für Schneidscheibe 08, Haltebacken 04 und Vorschubbacken 23.

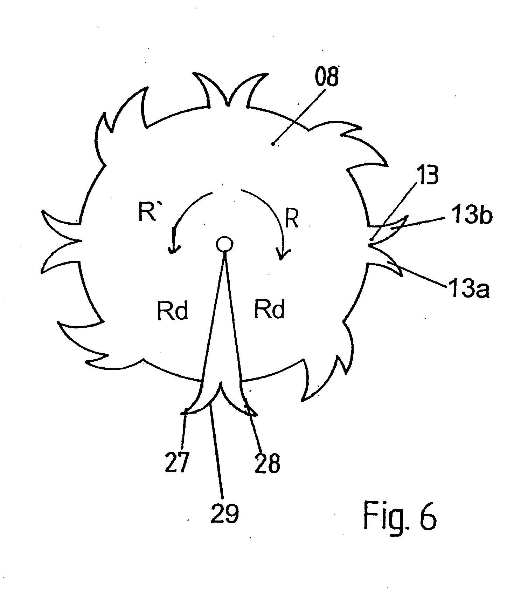

Fig. 6 zeigt eine Anreiß- und Schneidscheibe 08 in einer zweiten Ausführungsform. Die Schneidwerkzeuge 13 weisen hier jeweils einen in Rotationsrichtung R vorlaufenden Schneidzahn 13a und einen nachlaufenden Schneidzahn 13b auf. An einer vorlaufenden Kante des vorlaufenden Schneidzahnes 13a ist eine erste, vorlaufende Schneide 27 angeordnet. An einer nachlaufenden Kante des nachlaufenden Schneidzahnes 13b ist eine zweite, nachlaufende Schneide 28 angeordnet. Der vorlaufende Schneidzahn 13a weist darüber hinaus an seiner in Rotationsrichtung R nachlaufenden Kante eine dritte Schneide auf.

Die Anreiß- und Schneidscheibe 08 ist mittels einer angetriebenen Welle 09 in der Rotationsrichtung R und in einer entgegen gesetzten Rotationsrichtung R' rotierbar. Die Welle ist im Mittelpunkt, vorzugsweise Schwerpunkt, der Scheibe 08 befestigt. Darüber hinaus ist die Anreiß- und Schneidscheibe 08 radial zum Profilmaterial 03 hin und von ihm weg verfahrbar.

In Fig. 6 sind zwei Radialen Rd eingezeichnet, die vom Mittelpunkt der Scheibe 08 radial abgehen. Die erste Schneide 27 ist in Rotationsrichtung R gebogen. Dabei ist die erste Schneide 27 so angeordnet, dass sie über die Radiale Rd hinaus gebogen ist. Die zweite Schneide 28 ist in die entgegen gesetzte Rotationsrichtung R' gebogen und zwar ebenfalls über die Radiale Rd hinaus.

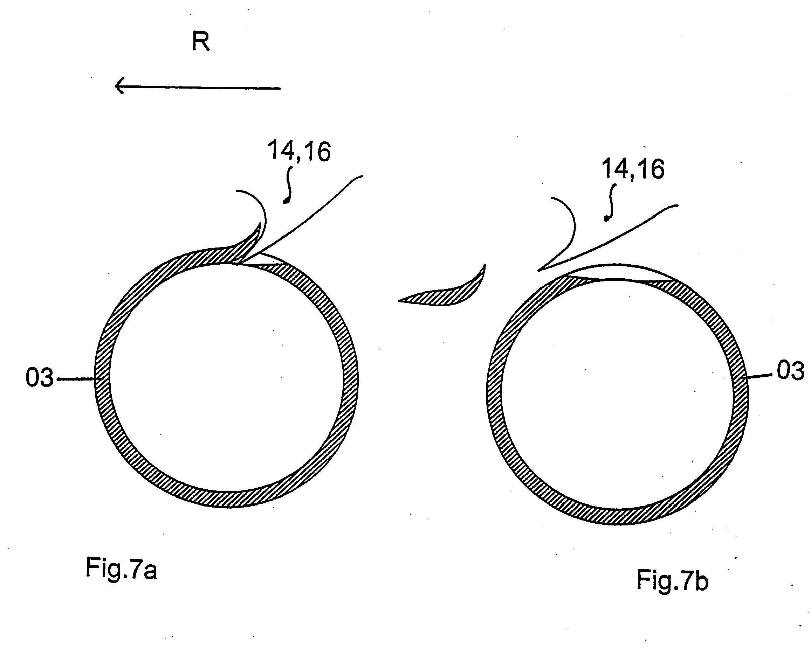

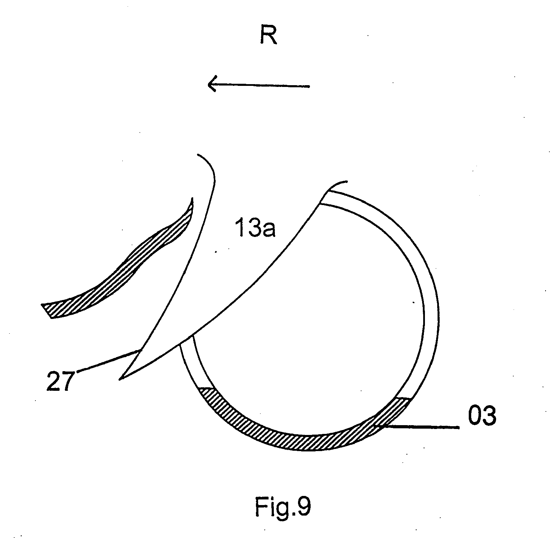

Das erfindungsgemäße Verfahren ist in den Fig.7a bis Fig.10b dargestellt. Zu seiner Durchführung kann eine Anreiß- und Schneidscheibe 08 gemäß Fig. 6 verwendet werden.

Zunächst wird das Rohr 03 in Fig.7a mittels eines der beiden Anreißzähne 14, 16 angerissen und durch eine Rotationsbewegung der Anreiß- und Schneidscheibe 08 wird ein erster Span vollständig aus der Wandung des Rohres 03 geschält. Es entsteht der Ritz 22 in der Wandung des Rohres 03.

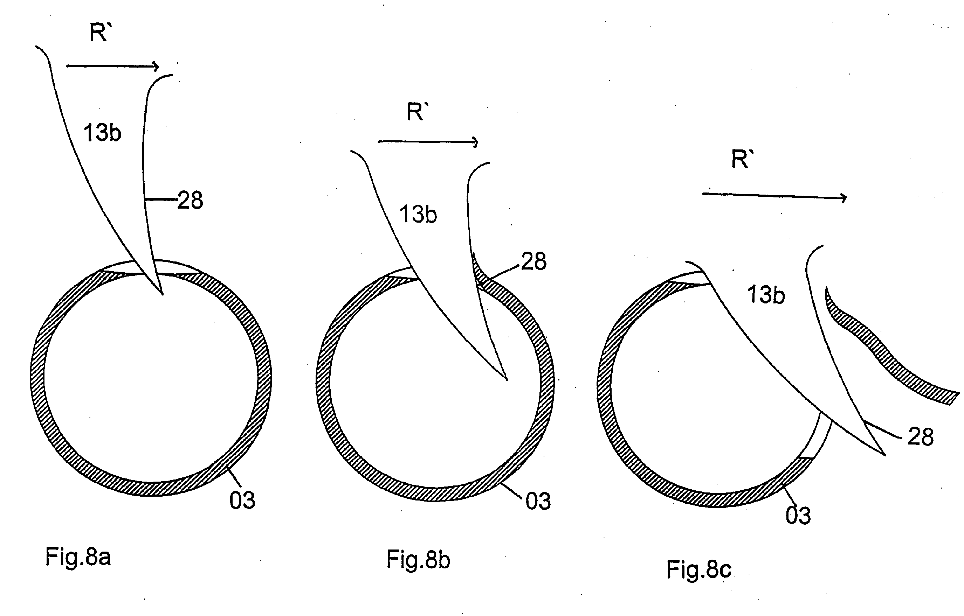

Das Anreiß- und Schneidwerkzeug 08 wird durch eine entsprechende Programmierung der Steuerschaltung 26 derart rotiert, dass der nachlaufende Schneidzahn 13b, gemäß Fig.8a, über dem Ritz 22 positioniert wird. Danach wird der nachlaufende Schneidzahn 13b durch eine Vertikalbewegung etwas in den Ritz 22 eingeführt. In einer sich anschließenden kombinierten entgegen gesetzten Rotationsbewegung R' und Verfahrbewegung zum Rohr 03 hin, wird in den Fig.8b und Fig.8c ein zweiter Span aus dem ersten Sektor in der Schnittebene 21 aus dem Rohr 03 heraus geschnitten. Dafür ist die zweite Schneide 28 vorgesehen.

Danach wird die Anreiß- und Schneidscheibe 08 vom Rohr 03 weg verfahren und der in den Fig.8 dargestellte Verfahrensschritt wird mit dem vorlaufenden Zahn 13a in Rotationsrichtung R wiederholt. Dabei wird der vorlaufende Zahn 13a in einer kombinierten Rotationsbewegung R und Verfahrbewegung zum Rohr 03 hin bewegt. Die erste Schneide 27 trennt dabei einen dritten Span in dem zweiten Sektor der Schnittebene 21 aus dem Rohr 03.

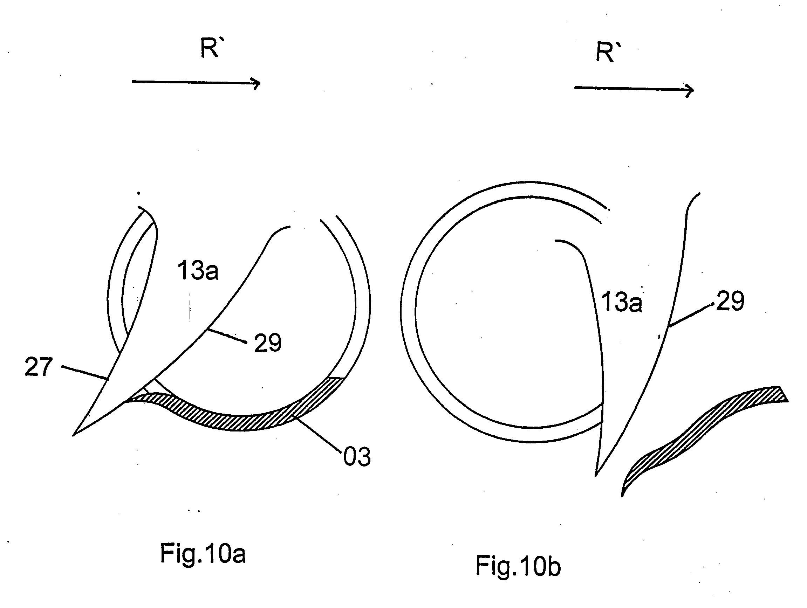

Durch die an der nachlaufenden Kante des vorlaufenden Zahns 13a vorgesehenen Schneide 29 wird, in einem sich anschließenden und in den Fig.10a und Fig.10b dargestellten Verfahrensschritt, das Rohr 03 vollständig durchgeschnitten. Dabei wird der vorlaufende Zahn 13a in entgegen gesetzter Rotationsrichtung R' rotiert und ein vierter Span aus der Schnittebene 21 des Rohrs 03 herausgetrennt.

## Patentansprüche

1. Schneidmaschine zum Abschneiden von Abschnitten (02) von einem stangenförmigen Profilmaterial (03) mit
einer Anreiß- und Schneidscheibe (08) mit wenigstens einem relativ zum Profilmaterial (03) bewegbaren Anreißwerkzeug (12), mit dem ein Ritz (22) in eine Außenwandung des Profilmaterials (03) einbringbar ist und wenigstens einem relativ zum Profilmaterial (03) bewegbaren Schneidwerkzeug (13) mit in einer Ebene der Scheibe (08) verlaufenden Schneiden (17,18), das in den Ritz (22) einführbar ist und mit dem ein Schnitt in das Profilmaterial (03) einbringbar ist,
**dadurch gekennzeichnet, dass** das wenigstens eine Anreißwerkzeug (12) und das wenigstens eine Schneidwerkzeug (13) während des Betriebs der Schneidmaschine (01) eine konstante Relativstellung aufweisen und das wenigstens eine Anreißwerkzeug (12) und das wenigstens eine Schneidwerkzeug (13) an der Anreiß- und Schneidscheibe (08) angeordnet sind und mit dem wenigstens einen Schneidwerkzeug (13) ein stoßender Schnitt in das Profilmaterial (03) einbringbar ist.

2. Schneidmaschine nach Anspruch 1,
**dadurch gekennzeichnet, dass** das wenigstens eine Anreißwerkzeug (12) und das wenigstens eine Schneidwerkzeug (13) als einteiliges Anreiß- und Schneidwerkzeug (08) ausgebildet sind.

3. Schneidmaschine nach Anspruch 1 oder 2,
**dadurch gekennzeichnet, dass** das Anreiß- und Schneidwerkzeug (08) um eine neben der Längsrichtung (L) des Profilmaterials (03) verlaufende Achse rotierbar ist und das wenigstens ein Anreißwerkzeug (12) und das wenigstens ein Schneidwerkzeug (13) radial von dem Anreiß- und Schneidwerkzeug (08) abgehen.

4. Schneidmaschine nach Anspruch 1, 2 oder 3,
**dadurch gekennzeichnet, dass** das Anreiß- und Schneidwerkzeug (08) scheibenförmig ausgebildet ist und um einen Scheibenmittelpunkt rotierbar ist.

5. Schneidmaschine nach Anspruch 4,
**dadurch gekennzeichnet, dass** das von dem rotierbaren Anreiß- und Schneidwerkzeug (08) abgehende, wenigstens eine Anreißwerkzeug (12) wenigstens zwei in einer Rotationsrichtung (R) hintereinander angeordnete Anreißzähne (14, 16) aufweist.

6. Schneidmaschine nach Anspruch 5,
**dadurch gekennzeichnet, dass** ein in Rotationsrichtung (R) nachlaufender Anreißzahn (14) radial weiter von dem Anreiß- und Schneidwerkzeug (08) absteht als ein vorlaufender Anreißzahn (16).

7. Schneidmaschine nach Anspruch 5,
**dadurch gekennzeichnet, dass** zwei Anreißzähne (14, 16) im Wesentlichen gleich weit radial vom Anreiß- und Schneidwerkzeug (08) abstehen und eine Steuerung vorgesehen ist, die einen radialen Vorschub des Anreiß- und Schneidwerkzeugs (08) hin zum Profilmaterial (03) während des Anreißvorgangs ermöglicht.

8. Schneidmaschine nach einem der Ansprüche 1 bis 7,
**dadurch gekennzeichnet, dass** eine erste Schneide (27) und eine zweite Schneide (28) vorgesehen sind, um das Profilmaterial (03) in von dem Inneren des Profilmaterials (03) nach außen gerichtete Schneidbewegungen zu schneiden

9. Schneidmaschine nach einem der Ansprüche 1 bis 8,
**dadurch gekennzeichnet, dass** das Schneidwerkzeug (13) eine erste in Rotationsrichtung (R) über eine Radiale (Rd) hinausgehend gebogene Schneide (27) aufweist und eine zweite in eine entgegen gesetzte Rotationsrichtung (R') über eine Radiale (Rd) hinausgehend gebogene Schneide (28) aufweist.

10. Schneidmaschine nach Anspruch 9,
**dadurch gekennzeichnet, dass** die erste Schneide an einer in Rotationsrichtung (R) vorlaufenden Kante eines in Rotationsrichtung (R) über eine Radiale (Rd) hinausgehend gekrümmten Schneidzahns (13a) angeordnet ist und die zweite Schneide (28) an einer in Rotationsrichtung (R) nachlaufenden Kante eines in die entgegen gesetzte Rotationsrichtung (R') über eine Radiale (Rd) hinausgehend gekrümmten Schneidzahns (13b) angeordnet ist.

11. Schneidmaschine nach Anspruch 9,
**dadurch gekennzeichnet, dass** eine nachlaufende Kante des in Rotationsrichtung (R) gekrümmten Schneidzahns (13a) und /oder eine vorlaufende Kante des in die entgegen gesetzte Rotationsrichtung (R') gekrümmten Schneidzahns (13b) eine dritte Schneide (29) aufweist.

12. Schneidmaschine ach einem der vorstehenden Ansprüche,
**dadurch gekennzeichnet, dass** entlang eines Umfangs des Anreiß- und Schneidwerkzeuges (08) abwechselnd Anreiß- (12) und Schneidwerkzeuge (13) angeordnet sind.

13. Schneidmaschine nach einem der vorstehenden Ansprüche, **gekennzeichnet durch** einen Wellenantrieb (11) für die Welle (09) und **durch** quer zur Längsrichtung (L) des Profilmaterials (03) **durch** einen Haltebackenantrieb (07) verfahrbare Haltebacken (04) und **durch** sowohl in Längsrichtung (L) als auch quer zur Längsrichtung (L) **durch** einen Vorschubbackenantrieb (24) verfahrbare Vorschubbacken (23) und eine Steuerung (26), die mit dem Wellenantrieb (11), dem Haltebackenantrieb (07) und dem Vorschubbackenantrieb (24) in Verbindung steht.

14. Verfahren zum Abschneiden von Abschnitten (02) von einem stangenförmigen Profilmaterial (03), insbesondere durch eine Maschine (01) nach wenigstens einem der Ansprüche 1 bis 13, indem
das Profilmaterial (03) vom Anreißwerkzeug (12) angeritzt wird,
und ein Schneidwerkzeug (13, 13a, 13b) mit in einer Ebene der Scheibe (08) verlaufenden Schneiden (17,18) durch den Ritz (22) in das Profilmaterial (03) eingeführt wird,
**dadurch gekennzeichnet, dass** das Anreißwerkzeug (12) rotiert wird und dadurch der Ritz (22) in das Profilmaterial (03) eingebracht wird und das Schneidwerkzeug (13, 13a, 13b) durch dieselbe Rotationsbewegung zum Profilmaterial (03) hinbewegt wird und die Relativstellung zwischen Anreißwerkzeug (12) und Schneidwerkzeug (13, 13a, 13b) beibehalten wird und das Schneidwerkzeug (13, 13a, 13b) durch eine Profilmaterialwandung gestoßen wird.

15. Verfahren nach Anspruch 14,
**dadurch gekennzeichnet, dass** das Profilmaterial (03) durch eine Schneidbewegung, die wenigstens in einer Bewegungskomponente von dem Innern des Profilmaterials ((03) nach außen gerichtet ist, von dem Schneidwerkzeug (13, 13a, 13b) geschnitten wird.

16. Verfahren nach Anspruch 14 oder 15,
**dadurch gekennzeichnet, dass** das Anreiß- und Schneidwerkzeug (08) während des Anreißvorganges in Rotationsrichtung (R) rotiert wird und dass ein zwei gleich lange Anreißzähne (14, 16) aufweisendes Anreißwerkzeug (13) in radialer Richtung zum Profilmaterial (03) hin vorgeschoben wird.

17. Verfahren nach Anspruch 14, 15 oder 16,
**dadurch gekennzeichnet, dass** das Anreiß- und Schneidwerkzeug (08) in Rotationsrichtung (R) rotiert wird, wobei das Profilmaterial (03) von dem Anreißwerkzeug (12) in einer Schnittebene (21) angeritzt wird und
das Anreiß- und Schneidwerkzeug (08) dann in eine entgegen gesetzte Rotationsrichtung (R') rotiert wird und das Profilmaterial (03) dann in der Schnittebene (21) in einer ersten Schneidbewegung mit einer von dem Inneren des Profilmaterials nach außen gerichteten Bewegungskomponente durch die zweite in die entgegen gesetzte Rotationsrichtung (R') über eine Radiale (Rd) hinausgehend gebogene Schneide (28) geschnitten wird und
das Anreiß- und Schneidwerkzeugs (08) dann wieder in Rotationsrichtung (R) rotiert wird und
das Profilmaterial (03) dann in der Schnittebene (21) in einer zweiten Schneidbewegung mit einer von dem Inneren des Profilmaterials nach außen gerichteten Bewegungskomponente durch die erste in Rotationsrichtung (R) über eine Radiale (Rd) hinausgehend gebogene Schneide (27) geschnitten wird.

18. Verfahren nach Anspruch 16,
**dadurch gekennzeichnet, dass** das Anreiß- und Schneidwerkzeug (08) einen in Rotationsrichtung vorlaufenden Schneidzahn (13a) mit der ersten Schneide (27) und einen in Rotationsrichtung (R) nachlaufenden Schneidzahn (13b) mit der zweiten Schneide (28) aufweist, indem
das Anreiß- und Schneidwerkzeug (08) dann in die entgegen gesetzte Rotationsrichtung (R') rotiert wird und
das Profilmaterial (03) dann von einer an der nachlaufenden Kante des vorlaufenden Schneidzahns (13a) angeordneten dritte Schneide (29) vollständig abgelängt wird.

## Claims

1. A cutting machine for cutting off portions (02) from a profiled material (03) in the form of a rod, with a scribing and cutting disc (08) with at least one scribing tool (12) which is capable of being moved relative to the profiled material (03) and by which a notch (22) is capable of being made in an outer wall of the profiled material (03), and at least one cutting tool (13) - with cutters (17, 18) extending in a plane of the disc (08) - which is capable of being moved relative to the profiled material (03) and which is capable of being inserted into the notch (22) and by which a cut is capable of being made in the profiled material (03), **characterized in that** the at least one scribing tool (12) and the at least one cutting tool (13) have a constant relative position during the operation of the cutting machine (01), and the at least one scribing tool (12) and the at least one cutting tool (13) are arranged on the scribing and cutting disc (08), and a straight cut is capable of being made in the profiled material (03) by the at least one cutting tool (13).

2. A cutting machine according to Claim 1, **characterized in that** the at least one scribing tool (12) and the at least one cutting tool (13) are constructed in the form of a one-piece scribing and cutting tool (08).

3. A cutting machine according to Claim 1 or 2, **characterized in that** the scribing and cutting tool (08) is rotatable about an axis extending alongside the longitudinal direction (L) of the profiled material (03), and the at least one scribing tool (12) and the at least one cutting tool (13) extend radially from the scribing and cutting tool (08).

4. A cutting machine according to Claim 1, 2 or 3, **characterized in that** the scribing and cutting tool (08) is constructed in the form of a disc and is rotatable about a midpoint of the disc.

5. A cutting machine according to Claim 4, **characterized in that** the at least one scribing tool (12) extending from the rotatable scribing and cutting tool (08) has at least two scribing teeth (14, 16) arranged one behind the other in a direction of rotation (R).

6. A cutting machine according to Claim 5, **characterized in that** a scribing tooth (14) trailing in the direction of rotation (R) projects further radially from the scribing and cutting tool (08) than a leading scribing tooth (16).

7. A cutting machine according to Claim 5, **characterized in that** two scribing teeth (14, 16) project equally far radially from the scribing and cutting tool (08), and a control means is provided which permits a radial advance of the scribing and cutting tool (08) towards the profiled material (03) during the scribing procedure.

8. A cutting machine according to any one of Claims 1 to 7, **characterized in that** a first cutter (27) and a second cutter (28) are provided in order to cut the profiled material (03) in cutting movements directed from the interior of the profiled material (03) towards the outside.

9. A cutting machine according to any one of Claims 1 to 8, **characterized in that** the cutting tool (13) has a first curved cutter (27) extending by way of a radial line **(Rd)** in the direction of rotation (**R**) and a second curved cutter (28) extending by way of a radial line (**Rd**) set in a direction of rotation (**R'**) in an opposed direction.

10. A cutting machine according to Claim 9, **characterized in that** the first cutter is arranged on an edge - leading in the direction of rotation (**R**) **-** of a curving cutting tooth (13a) extending by way of a radial line (**Rd**) in the direction of rotation (**R**) and the second cutter (28) is arranged on an edge - trailing in the direction of rotation (**R**) - of a curving cutting tooth (13b) extending by way of a radial line (**Rd**) in the direction of rotation (**R'**) set in an opposed direction.

11. A cutting machine according to Claim 9, **characterized in that** a trailing edge of the cutting tooth (13a) curving in the direction of rotation (**R**) and/or a leading edge of the cutting tooth (13b) curving in the direction of rotation (**R'**) set in an opposed direction has or have a third cutter (29).

12. A cutting machine according to any one of the preceding Claims, **characterized in that** scribing tools (12) and cutting tools (13) are arranged in an alternating manner along the periphery of the scribing and cutting tool (08).

13. A cutting machine according to any one of the preceding Claims, **characterized by** a shaft drive (11) for the shaft (09), and by retaining jaws (04) capable of being moved transversely to the longitudinal direction (**L**) of the profiled material (03) by a retaining-jaw drive (07), and by advancing jaws (23) which are capable of being moved both in the longitudinal direction (**L**) and transversely to the longitudinal direction (**L**) by an advancing-jaw drive (24), and a control means (26) which is connected to the shaft drive (11), the retaining-jaw drive (07) and the advancing-jaw drive (24).

14. A method of cutting off portions (02) from a profiled material (03) in the form of a rod, in particular by a machine (01) according to at least one of Claims 1 to 13, wherein the profiled material (03) is notched by the scribing tool (12), and a cutting tool (13, 13a, 13b) with cutters (17, 18) extending in the plane of the disc (08) is inserted into the profiled material (03) through the notch (22), **characterized in that** the scribing tool (12) is rotated and, as a result, the notch (22) is made in the profiled material (03), and the cutting tool (13, 13a, 13b) is moved towards the profiled material (03) by the same rotational movement, and the relative position between the scribing tool (12) and the cutting tool (13, 13a, 13b) is retained, and the cutting tool (13, 13a, 13b) is thrust through a wall of the profiled material.

15. A method according to Claim 14, **characterized in that** the profiled material (03) is cut by the cutting tool (13, 13a, 13b) with a cutting movement which is directed at least in one movement component from the interior of the profiled material (03) towards the outside.

16. A method according to Claim 14 or 15, **characterized in that** the scribing and cutting tool (08) is rotated in the direction of rotation **(R)** during the scribing procedure, and a scribing tool (13) [*sic*] comprising two scribing teeth (14, 16) of equal length is advanced towards the profiled material (03) in the radial direction.

17. A method according to Claim 14, 15 or 16, **characterized in that** the scribing and cutting tool (08) is rotated in the direction of rotation (**R**), wherein the profiled material (03) is notched in a cutting plane (21) by the scribing tool (12), and the scribing and cutting tool (08) is then rotated in a direction of rotation (**R'**) set in an opposed direction, and the profiled material (03) is then cut in the cutting plane (21) by the second curved cutter (28) extending by way of a radial line (**Rd**) in the direction of rotation (**R'**) set in an opposed direction in a first cutting movement with a movement component directed from the interior of the profiled material towards the outside, and the scribing and cutting tool (08) is then rotated again in the direction of rotation (**R)**, and the profiled material (03) is then cut in the cutting plane (21) by the first curved cutter (27) extending by way of a radial line (**Rd**) in the direction of rotation (**R**) in a second cutting movement with a movement component directed from the interior of the profiled material towards the outside.

18. A method according to Claim 16, **characterized in that** the scribing and cutting tool (08) has a cutting tooth (13a) leading in the direction of rotation with the first cutter (27) and a cutting tooth (13b) trailing in the direction of rotation (**R**) with the second cutter (28), wherein the scribing and cutting tool (08) is then rotated in the direction of rotation (**R'**) set in an opposed direction, and the profiled material (03) is then cut to length completely by a third cutter (29) arranged on the trailing edge of the leading cutting tooth (13a).

## Revendications

1. Machine de coupe pour découper des tronçons (02) dans un matériau profilé (03) en forme de tube, comprenant un disque d'amorçage et de coupe (08) avec au moins un outil d'amorçage (12), pouvant être déplacé par rapport au matériau profilé (03) et permettant de réaliser une amorce (22) dans une paroi extérieure du matériau profilé (03), et au moins un outil de coupe (13), pouvant être déplacé par rapport au matériau profilé (03) et doté de couteaux (17, 18) s'étendant dans un plan du disque (08), qui peut être engagé dans l'amorce (22) et permet de réaliser une coupe dans le matériau profilé (03), **caractérisée par le fait que** pendant le fonctionnement de la machine de coupe (01), l'outil d'amorçage (12), au nombre d'au moins un, et l'outil de coupe (13), au nombre d'au moins un, présentent une position relative constante et que l'outil d'amorçage (12), au nombre d'au moins un, et l'outil de coupe (13), au nombre d'au moins un, sont disposés sur le disque d'amorçage et de coupe (08) et l'outil de coupe (13), au nombre d'au moins un, permet de réaliser une coupe jointive dans le matériau profilé (03).

2. Machine de coupe selon la revendication 1, **caractérisée par le fait que** l'outil d'amorçage (12), au nombre d'au moins un, et l'outil de coupe (13), au nombre d'au moins un, sont réalisés comme outil d'amorçage et de coupe (08) monobloc.

3. Machine de coupe selon la revendication 1 ou 2, **caractérisée par le fait que** l'outil d'amorçage et de coupe (08) peut être mis en rotation autour d'un axe s'étendant dans le sens longitudinal (L) du matériau profilé (03), et l'outil d'amorçage (12), au nombre d'au moins un, et l'outil de coupe (13), au nombre d'au moins un, s'étendent radialement à partir de l'outil d'amorçage et de coupe (08).

4. Machine de coupe selon la revendication 1, 2 ou 3, **caractérisée par le fait que** l'outil d'amorçage et de coupe (08) est réalisé sous forme de disque et peut être mis en rotation autour d'un centre de disque.

5. Machine de coupe selon la revendication 4, **caractérisée par le fait que** l'outil d'amorçage (12), au nombre d'au moins un, qui s'étend à partir de l'outil d'amorçage et de coupe (08) rotatif, présente au moins deux dents d'amorçage (14, 16) disposées l'une derrière l'autre dans le sens de rotation (R).

6. Machine de coupe selon la revendication 5, **caractérisée par le fait qu'**une dent d'amorçage (14) qui est disposée à l'arrière dans le sens de rotation (R) s'étend radialement plus loin depuis l'outil d'amorçage et de coupe (08) qu'une dent d'amorçage (16) disposée à l'avant.

7. Machine de coupe selon la revendication 5, **caractérisée par le fait que** deux dents d'amorçage (14, 16) s'étendent radialement sensiblement sur la même distance depuis l'outil d'amorçage et de coupe (08) et qu'il est prévu une commande qui permet d'effectuer une avance radiale de l'outil d'amorçage et de coupe (08), en direction du matériau profilé (03), pendant l'opération d'amorçage.

8. Machine de coupe selon une des revendications 1 à 7, **caractérisée par le fait qu'**il est prévu un premier couteau (27) et un deuxième couteau (28) pour couper le matériau profilé (03) avec des mouvements de coupe qui sont dirigés de l'intérieur vers l'extérieur du matériau profilé (03).

9. Machine de coupe selon une des revendications 1 à 8, **caractérisée par le fait que** l'outil de coupe (13) présente un premier couteau (27), qui est incurvé dans le sens de rotation (R), au-delà d'une radiale (Rd), et un deuxième couteau (28) qui est incurvé dans le sens de rotation opposé (R'), au-delà d'une radiale (Rd).

10. Machine de coupe selon la revendication 9, **caractérisée par le fait que** le premier couteau est disposé sur une arête, située à l'avant dans le sens de rotation (R), d'une dent de coupe (13a) incurvée dans le sens de rotation (R), au-delà d'une radiale (Rd), et le deuxième couteau (28) est disposé sur une arête, prévue à l'arrière dans le sens de rotation (R), d'une dent de coupe (13b) incurvée dans le sens de rotation opposé (R'), au-delà d'une radiale (Rd).

11. Machine de coupe selon la revendication 9, **caractérisée par le fait qu'**une arête arrière de la dent de coupe (13a) incurvée dans le sens de rotation (R) et/ou une arête avant de la dent de coupe (13b) incurvée dans le sens de rotation opposé (R') présente un troisième couteau (29).

12. Machine de coupe selon une des revendications précédentes, **caractérisée par le fait que** des outils d'amorçage (12) et des outils de coupe (13) sont disposés en alternance sur le pourtour de l'outil d'amorçage et de coupe (08).

13. Machine de coupe selon une des revendications précédentes, **caractérisée par le fait qu'**elle comporte un moyen d'entraînement d'arbre (11) pour l'arbre (09), des mors de maintien (04) pouvant être déplacés par un moyen d'entraînement de mors de maintien (07), perpendiculairement à la direction longitudinale (L) du matériau profilé (03), des mors d'avance (23) pouvant être déplacés par un moyen d'entraînement de mors d'avance (24), aussi bien dans la direction longitudinale (L) que perpendiculairement à la direction longitudinale (L), et une commande (26) qui est reliée au moyen d'entraînement d'arbre (11), au moyen d'entraînement de mors de maintien (07) et au moyen d'entraînement de mors d'avance (24).

14. Procédé de découpe de tronçons (02) dans un matériau profilé (03) en forme de tube, en particulier à l'aide d'une machine (01) selon au moins une des revendications 1 à 13, selon lequel une amorce est réalisée dans le matériau profilé (03) par l'outil d'amorçage (12), et un outil de coupe (13, 13a, 13b), comportant des couteaux (17, 18) qui s'étendent dans un plan du disque (08), est engagé dans le matériau profilé (03) en passant par l'amorce (22), **caractérisé par le fait que** l'outil d'amorçage (12) est mis en rotation et l'amorce (22) est ainsi réalisée dans le matériau profilé (03), et l'outil de coupe (13, 13a, 13b) est déplacé en direction du matériau profilé (03) par le même mouvement de rotation, et la position relative entre l'outil d'amorçage (12) et l'outil de coupe (13, 13a, 13b) est conservée, et l'outil de coupe (13, 13a, 13b) est poussé à travers une paroi de matériau profilé.

15. Procédé selon la revendication 14, **caractérisé par le fait que** le matériau profilé (03) est coupé par l'outil de coupe (13, 13a, 13b) par un mouvement de coupe qui est dirigé, au moins avec une composante de mouvement, de l'intérieur du matériau profilé (03) vers l'extérieur.

16. Procédé selon la revendication 14 ou 15, **caractérisé par le fait que** l'outil d'amorçage et de coupe (08) est mis en rotation dans le sens de rotation (R) pendant l'opération d'amorçage, et **par le fait qu'**un outil d'amorçage (12), comprenant deux dents d'amorçage (14, 16) de même longueur, est avancé dans la direction radiale vers le matériau profilé (03).

17. Procédé selon la revendication 14, 15 ou 16, **caractérisé par le fait que** l'outil d'amorçage et de coupe (08) est mis en rotation dans le sens de rotation (R), avec amorçage du matériau profilé (03) par l'outil d'amorçage (12), dans un plan de coupe (21), puis l'outil d'amorçage et de coupe (08) est mis en rotation dans le sens opposé (R') et le matériau profilé (03) est alors coupé dans le plan de coupe (21), lors d'un premier mouvement de coupe ayant une composante de mouvement dirigée de l'intérieur du matériau profilé vers l'extérieur, par le deuxième couteau (28) incurvé dans le sens de rotation opposé (R'), au-delà d'une radiale (Rd), et l'outil d'amorçage et de coupe (08) est de nouveau tourné dans le sens de rotation (R), et le matériau profilé (03) est coupé dans le plan de coupe (21), lors d'un deuxième mouvement de coupe ayant une composante de mouvement dirigée de l'intérieur du matériau profilé vers l'extérieur, par le premier couteau (27) incurvé dans le sens de rotation (R), au-delà d'une radiale (Rd).

18. Procédé selon la revendication 16, **caractérisé par le fait que** l'outil d'amorçage et de coupe (08) comporte une dent de coupe (13a), qui est située à l'avant dans le sens de rotation et porte le premier couteau (27), et une dent de coupe (13b) qui est située à l'arrière dans le sens de rotation (R) et porte le deuxième couteau (28), procédé selon lequel l'outil d'amorçage et de coupe (08) est ensuite tourné dans le sens de rotation opposé (R') et le matériau profilé (03) est tronçonné complètement par un troisième couteau (29) disposé sur l'arête arrière de la dent de coupe (13a) située à l'avant.
